# EUROPEAN PATENT APPLICATION

(11) **EP 2 525 315 A1**
(43) Date of publication of application: **21.11.2012**
(21) Application number: 12168536.6
(22) Date of filing: 18.05.2012
(51) Int. Cl.: G06Q 10/06

(54) **System, method, and program for supporting creation of plant construction process**

(30) Priority: 18.05.2011 JP 2011110978
(71) Applicant: Hitachi, Ltd., Chiyoda-ku Tokyo 100-8280 (JP)
(72) Inventor: Fukuda, Yoshibumi, Tokyo 100-8220 (JP); Yokota, Takeshi, Tokyo 100-8220 (JP); Seki, Hiroshi, Tokyo 100-8220 (JP); Akagi, Kenji, Ibaraki 317-0073 (JP); Morita, Kensuke, Ibaraki 317-0073 (JP)
(74) Representative: MERH-IP Matias Erny Reichl Hoffmann

(57) **Abstract**

In case that work sections are elaborated with progress of a plant construction plan, redoing of work is generated and work efficiency drops. To solve these problems, a plant-construction-process creation support system, which supports creation of a plant construction process and a building process for the building of the plant, includes: a device specification holding unit; a building information holding unit; a crane specification holding unit; a delivery path creation unit that computes paths for delivering devices into work sections, avoiding interference; and a building process assignment unit that, when a building process for an outline building has been obtained, assigns tentative work period information to respective work sections that are objects of avoiding interference with a crane and the devices during delivery of the devices by a crane, and assigns detailed work period information to the respective work sections when the building process for the building has been updated.

## Description

### BACKGROUND OF THE INVENTION

### Field of the Invention

The present invention relates to a plant- construction-process creation support system, a plant- construction-process creation support method, and a program to support creation of a building process for a building as delivery site, in making a delivery plan for devices in plant construction, wherein a crane is used for delivery.

### Description of the Related Art

In recent years, as the demand for electric power has increased, demand for power plants represented by nuclear power plants and the like has increased worldwide. Consequently, power plants have come to be constructed at home and abroad, and the number of constructions is increasing. In construction of plants represented by power plants, various works are performed in parallel, such as improving the conditions of ground of a planned site, building a building, delivering and installing devices, piping, and the like. These works are executed with formation of agreement between different business operators of building, civil construction, manufacturing and the like, and with supervision by the respective business operators.

Prior to execution of construction work, there are three kinds of work phases, namely, design, procurement, and construction. First, in the design phase, based on discussion between the respective business operators, carried out are designing of a plant building and inner portions of the building, and in addition, making layout of devices to be installed in the building, making a delivery procedure, setting a schedule, setting of temporary places prior to delivery, setting of the kinds of heavy machines used for delivery, setting of operation areas, and the like. In the procurement phase, materials, devices, and the like required in the design phase are procured. In this situation, works are carried out such that materials and the like are delivered to the construction site, according to a determined schedule. In the construction phase, works are carried out, using heavy machines, according to a delivery procedure determined in the design phase. Operation of the heavy machines and the like is performed within operation areas determined in the design phase so that interference with other business operators does not occur. For example, in case of delivering the component devices of a plant into the building by the use of a crane, devices disposed in a temporary region that is present on a yard being the ground of the plant are delivered into the building, using a crane that moves only in a crane operation region.

In order to decrease redoing works in each phase and thereby smooth the overall work execution in such a manner, it is necessary to attain, in the design phase, a work plan with high efficiency and accuracy. Conventionally, a skilled person has been in charge of such a work plan in most cases. However, with the recent increase in the demand for power plants, the number of cases of designing a plant is increasing, and it is required that an efficient work plan can be created also by a person other than skilled persons.

In creating a plant construction plan represented by a power plant construction, a planner considers in the design phase the delivery procedure of devices into a building, using a heavy machine such as a crane, and thus creates a delivery plan. It is essential for the planner to determine a delivery path where the crane itself or a device in delivery does not interfere with a wall or a floor of the building, in order to ensure execution of the delivery work of devices by the crane.

In general, in order to reduce the period of plant construction work, the building work of a building and the delivery work of devices into the building are carried out in parallel in most cases. As the shape of the building changes depending on the time of delivery work of devices, in order to determine delivery paths where interference with a wall or a floor of the building is avoided, it is necessary to recognize the building status of the building at the respective times of delivery work of devices.

In making plant construction plan, creation of delivery paths and the like are carried out before concrete works start. As the concrete works have not started then, a building process is planned, using information on contents, numeric values, and the like, which are initially determined.

In making a plant construction plan, a construction plan is no more than overview in the early stage, and the construction plan is elaborated with progress of the construction plan. For example, for a building process for a building, building work periods are set to approximate values for respective floors, and based on association with other processes, the respective building work periods are set with categorization of the respective floors into east-west-south-north work sections. When the construction plan further progresses, different building periods are set for more detailed work sections, and thus the construction plan is elaborated. In this case, in order to determine delivery paths, the new detailed work sections become objects of consideration of avoidance of interference in the delivery work time of devices. In work sections where a building work is performed, or in work sections where a built structure is present after completion of building work, it is necessary to operate a crane and a device such as to avoid interference.

In CAD (Computer Aided Design), a work section refers to a shape that occupies a geographical space. On the other hand, a building work period refers to a work period defined by the start time of the work and the completion time of work. In setting a building work period for a work section, information on a work period is associated with a shape on CAD.

In conventional technologies, in making a construction plan, an element model of a plant is generated from a plant model for designing, and a method of associating the element model with a work section is used. Further, by assigning a work model related to construction to a certain work section of the plant element model, an individual work model for the work section is generated. By individual work models, the start times and the completion times of works in the corresponding work sections can be indicated, and using this manner, the building status of the building at a specific time can be obtained. By using this building status, it is possible to accurately represent paths for delivery works.

In other known technologies, in planning disposition of devices into a building, by holding physical connection element data of the devices and, in addition simultaneously, connection path data related to racks and the like necessary for connection, design work matching concrete building work is carried out. Further, in another known technology, consideration items, such as noise generation, which are not represented in drawings, are set by a user as user designation range data, and design work matching concrete building work is thereby carried out.
JP H10-115096 A discloses invention that enables setting the start time of a work and the completion time (termination time) of the work for each work section by using each individual work model.
JP 2007-164771 A discloses invention that enables carrying out design work matching concrete building work by using user designation range data having been set by a user.

According to the invention disclosed by JP H10-115096 A, in case that work sections as objects of setting work period information are elaborated with progress of a plant construction plan, it is necessary to update the setting of the start time of a work and the completion time of the work for each of all the new work sections after the division, which causes a problem of dropping the efficiency of planning work.

According to the invention disclosed by JP 2007-164771 A, in case that work sections are elaborated with progress of a plant construction plan, it is necessary to re-input connection path data and the like, which causes a problem of dropping the efficiency of planning work. Further, user designation range data is information indicating spatial disposition, and it is difficult to indicate a temporal change in status of building work only by this information.

### SUMMARY OF THE INVENTION

In this situation, an object of the invention is to provide a plant-construction-process creation support system, a plant- construction-process creation support method, and a program which do not cause redoing of work and but enable reduction in a drop of efficiency even in case that work sections are elaborated with progress of a plant construction plan.

In order to solve the above-described problems and attain the object of the present invention, the following arrangement has been developed.
That is, a plant-construction-process creation support system according to the present invention is a plant-construction-process creation support system that supports creation of a construction process for a plant and a building process for a building of the plant, the system including: a device specification holding unit that holds specifications of devices; a building information holding unit that holds information on the building and respective work sections elaborated from the building; and a building process assignment unit that, when a building process for an outline building has been obtained, assigns tentative work period information to the respective work sections, and when the building process for the building has been updated, assigns detailed work period information to the respective work sections, wherein, in case of inputting a new work section at a place overlapping with an old work section/sections that are present from before updating the building process, when the building process has been updated, the building process assignment unit assigns work period information on the old work section/sections to work period information on the new work section.
Other arrangements will be described in the description of 'detailed description of the preferred embodiments'.

### BRIEF DESCRIPTION OF THE DRAWINGS

FIG. 1 is a diagram showing a plant-construction-process creation support system in a first embodiment;
FIG. 2 is a diagram showing an example of the layout of a yard in the first embodiment;
FIGS. 3A to 3C are diagrams showing an example of setting work sections of a building in the first embodiment;
FIG. 4 is a diagram showing an example of a work section creation screen in the first embodiment;
FIG. 5 is a diagram showing an example of a work-period-information setting dialogue in the first embodiment;
FIGS. 6A and 6B are diagrams showing an example of work sections and work period information in the first embodiment;
FIG. 7 is a flowchart showing the process of the plant-construction-process creation support system in the first embodiment;
FIG. 8 is a flowchart showing the process of setting work period information in the first embodiment;
FIG. 9 is a flowchart showing the process of obtaining associated section information in the first embodiment;
FIGS. 10A and 10B are diagrams showing work sections and work period information (Case 1) in a second embodiment;
FIGS. 11A and 11B are diagrams showing work sections and work period information (Case 2) in the second embodiment;
FIG. 12 is a diagram showing a warning dialogue in the second embodiment;
FIG. 13 is a flowchart showing the process of setting work period information in the second embodiment;
FIG. 14 is a flowchart showing the process of obtaining associated section information (Case 1) in the second embodiment;
FIG. 15 is a flowchart showing the process of obtaining associated section information (Case 2) in the second embodiment;
FIG. 16 is a diagram showing a plant-construction-process creation support system in a third embodiment;
FIGS. 17A and 17B are diagrams showing work sections and work period information in the third embodiment;
FIG. 18 is a flowchart showing the process of setting work period information in the third embodiment; and
FIG. 19 is a flowchart showing the process of setting work period information, according to horizontally next work sections in the third embodiment.

### DETAILED DESCRIPTION OF THE PREFERRED EMBODIMENTS

Preferred embodiments (hereinafter, each of which referred to as 'the present embodiment') of the present invention will be described below, with reference to the drawings and the like.

### First Embodiment

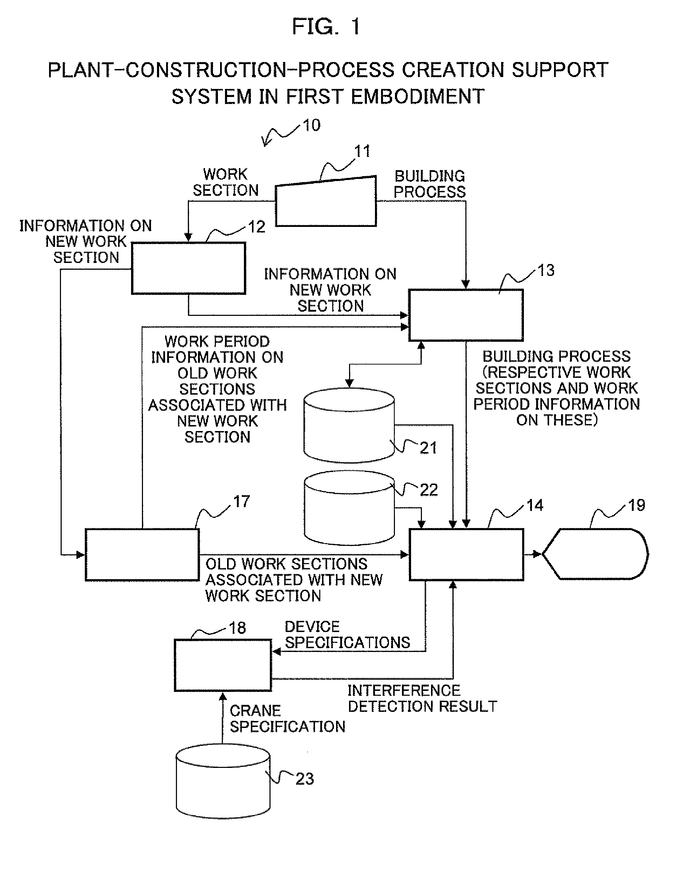

FIG. 1 is a diagram showing a plant-construction-process creation support system in a first embodiment.
A plant-construction-process creation support system 10 includes an input unit 11, a work section creation unit 12, a building process assignment unit 13, a delivery path creation unit 14, an associated section detection unit 17, an interference detection unit 18, an output unit 19, a building information holding unit 21, a device specification holding unit 22, and a crane specification holding unit 23. The plant-construction-process creation support system 10 supports creation of a construction process for a plant and a building process for the building of the plant.

The input unit 11 is an input device, such as a keyboard, a mouse, etc., receives an input from a user, and transmits an instruction input to the work section creation unit 12 and the building process assignment unit 13.

A work section is input via the input unit 11 to the work section creation unit 12. The work section creation unit 12 sets a work section into a building that is present on CAD, each of the work sections being a spatial unit in performing building work, and outputs information on the work section having been set.

A building process is input via the input unit 11 to the building process assignment unit 13. The building process assignment unit 13 assigns work period information provided with the start time of a building work and the completion time of a building work to the corresponding work section created by the work section creation unit 12, and performs a building process assignment process for outputting a building process including the assigned work period information. The building process assignment unit 13 further assigns work period information to both of work sections before elaborating work sections and the work section after elaborating work sections, the elaboration accompanying the progress of the plant construction plan, then outputs a building process including the assigned work period information.
When a building process for an outline building has been obtained, the building process assignment unit 13 assigns tentative work period information to respective work sections, which are objects of avoiding interference with a crane and devices in delivering these devices by the crane. When the building process for the building has been updated, the building process assignment unit 13 assigns detailed work section information to these work sections.

The delivery path creation unit 14 performs a delivery path creation process that computes the times when delivery works of the respective devices are carried out, based on the specifications of the respective devices held by the device specification holding unit 22 and information on the building shape held by the building information holding unit 21. The delivery path creation unit 14 obtains a building shape in construction at the delivery times of the respective devices, using the work sections created by the work section creation unit 12 and the building process, for the building, assigned by the building process assignment unit 13. Further, the delivery path creation unit 14 determines, by the interference detection unit 18, whether interference is generated between the building shape, the shapes of the devices, and the shape of the crane held by the crane specification holding unit 23. Based on this determination, the delivery path creation unit 14 creates a delivery path for delivery of a device without generation of interference, and outputs the delivery path to the output unit 19.

Based on the building, the device, and the crane having been set on CAD, the interference detection unit 18 detects whether or not interference is generated between the building, the device, and the crane on a delivery path, when the device is delivered into the building. Then, the interference detection unit 18 outputs a result of this interference detection.

The associated section detection unit 17 detects association between the old work sections, which are present from before elaboration of the construction process, and the new work section, which is present after elaboration of the construction process at the same position as the position of an old work section/sections out of the above-described old work sections; assigns the work period information on the old work section/sections to the new work section; and transmits the assigned work period information. Simultaneously, this/these old work section/sections are removed from the objects, of interference detection, in the delivery path creation unit 14.

The output unit 19 includes, for example, an image output device, which is a display or a printer, and an auxiliary storage device, which is an optical drive unit capable of recording image data. A delivery path having been output by the delivery path creation unit 14, the building shape, the shape of a device, the shape of the crane, the state of movement of the device and the crane along the delivery path, are converted into an image by the output unit 19, and the image is output for the user by the output unit 19.

The building information holding unit 21 holds information on the building or information on work sections elaborated from the building, for example, information on the shapes, the positions, the heights of these, and inputs/outputs the information in response to a request. The building information holding unit 21 is a database that holds the information on the building and the respective work sections elaborated from the building, using a storage device, such as a hard disk unit, flash memory, or the like.

The device specification holding unit 22 holds specifications of the devices to be delivered into the building by the crane, for example, information on the shapes, the weights, and the delivery times, and input/outputs the information in response to a request. The device specification holding unit 22 is a database that holds the specifications of the devices by a storage device, similarly to the building information holding unit 21.

The crane specification holding unit 23 holds information on the specifications of the crane, which is a heavy machine used for delivering the devices into the building, for example, information on the shape, the rated load, etc., and inputs/outputs such information in response to a request. The crane specification holding unit 23 is a database that holds the specifications of the crane by a storage device similarly to the device specification holding unit 22 and the building information holding unit 21.

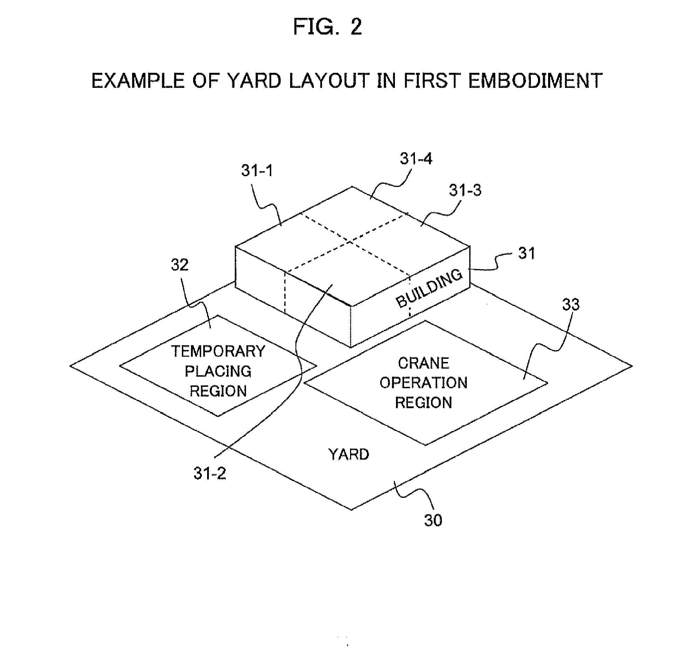

FIG. 2 is a diagram showing an example of the layout of a yard in the first embodiment.
A building 31 as an object of plant construction, a temporary placing region 32, and a crane operation region 33 are provided on the yard 30.
The building 31 is divided in a plurality of work sections in order to improve the efficiency of building work. The building 31 shown in FIG.2 is divided in four work sections, which are an old work section 1 (31-1), an old work section 2 (31-2), an old work section 3 (31-3), and an old work section 4 (31-4) and are present from before elaboration of the construction process.

The temporary placing region 32 is a region to temporarily dispose devices being objects of delivery before delivery into the building 31. The crane operation region 33 is a region where the crane operates when the crane carries out delivery work.

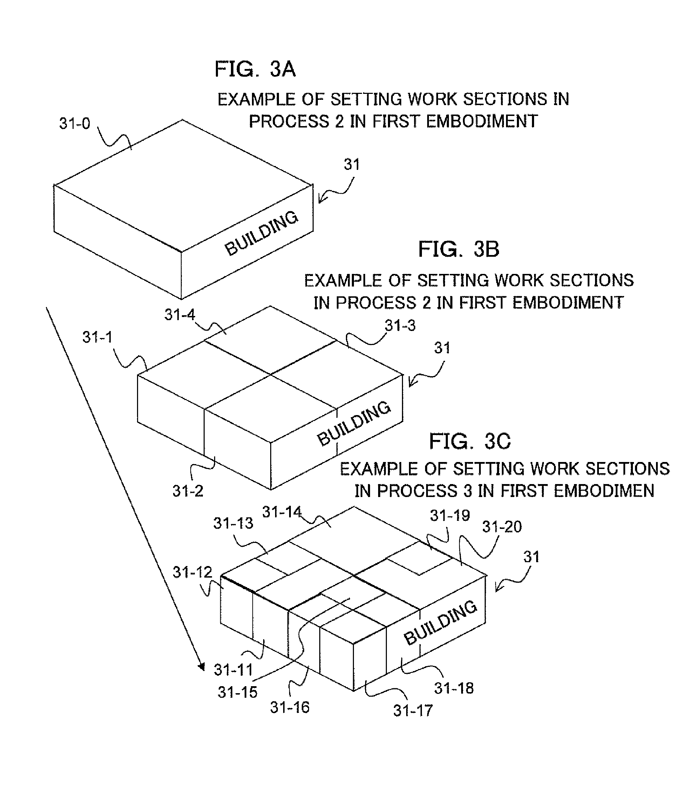

FIGS. 3A to 3C are diagrams showing an example of setting work sections of the building in the first embodiment. FIG. 3A shows setting of a work section in a process 1. FIG. 3B shows setting of work sections in a process 2. FIG. 3C shows setting of work sections in a process 3.
The work process 1 is a process in the early stage of the plant construction plan. The process 2 is a post-process subsequent to the process 1. The process 3 is a post-process subsequent to the process 2.

As shown in FIG. 3A, only an outline work section is set for the building 31 in the process 1, which is in the early stage of the plant construction plan. Accompanying update of the building process, the work process of the building 31 is set, being gradually elaborated. In the process 1 shown in FIG. 3A, one floor of the building 31 is set wholly to a single work section 31-0.
As shown in FIG. 3B, in the process 2, which is the post-process subsequent to the process 1, the one floor of the building 31 is set into four detailed work sections 31-1 to 31-4.
As shown in FIG. 3C, in the process 3, which is the post-process subsequent to the process 2, the one floor of the building 31 is set into ten further detailed work sections 31-11 to 31-20.

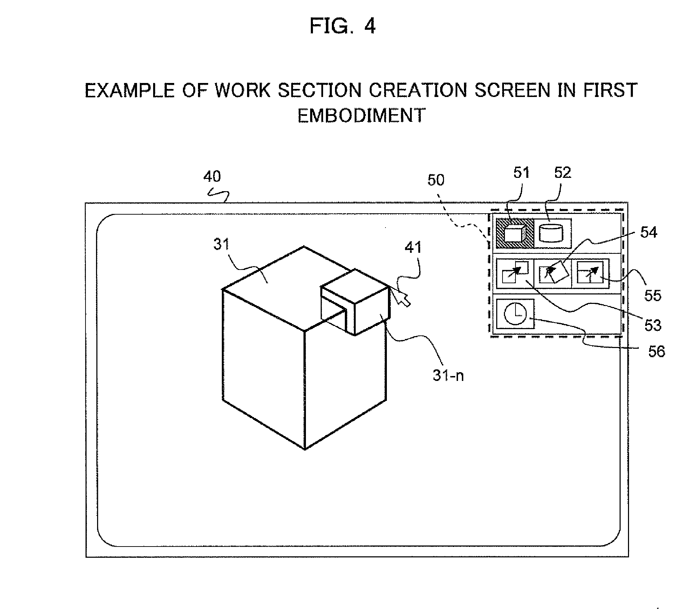

FIG. 4 is a diagram showing an example of a work section creation screen in the first embodiment.
A work section creation screen 40 is output on the output unit 19, for example, a display. The work section creation screen 40 is provided with a work section operation tool 50 at the right top, and displays at the central portion the shape of the building 31, which is the object of creating work sections. The work section creation screen 40 is operable by a mouse cursor 41 in an arrow shape.

The work section operation tool 50 includes at the upper portion a rectangular parallelepiped section setting tool 51 and a cylindrical section setting tool 52, at the central portion a translation tool 53, a rotational movement tool 54, and a zoom-in/zoom-out tool 55, and at the lower portion a shape/work-period information setting tool 56.

The rectangular parallelepiped section setting tool 51 newly creates a rectangular parallelepiped work section. The cylindrical section setting tool 52 newly creates a cylindrical section. The translation tool 53 translates a selected work section. The rotational movement tool 54 rotationally moves a selected work section. The zoom-in/zoom-out tool 55 zooms in or zooms out a selected work section. The shape/work-period information setting tool 56 sets information on the shape or the work period of a selected work section.

In the work section operation tool 50, shown in FIG. 4, the rectangular parallelepiped section setting tool 51 is selected. Using a pointing device, such as a mouse, a user disposes a work section rectangular parallelepiped 31-n (A natural number is represented by n.) in a space displayed by the work section creation screen 40. The work section rectangular parallelepiped 31-n is set as a work section in using the system. In such a manner, all necessary work sections are set. Subsequently, the user selects the shape/work-period information setting tool 56 and sets periods for carrying out building work in the respective work sections, namely, work period information.

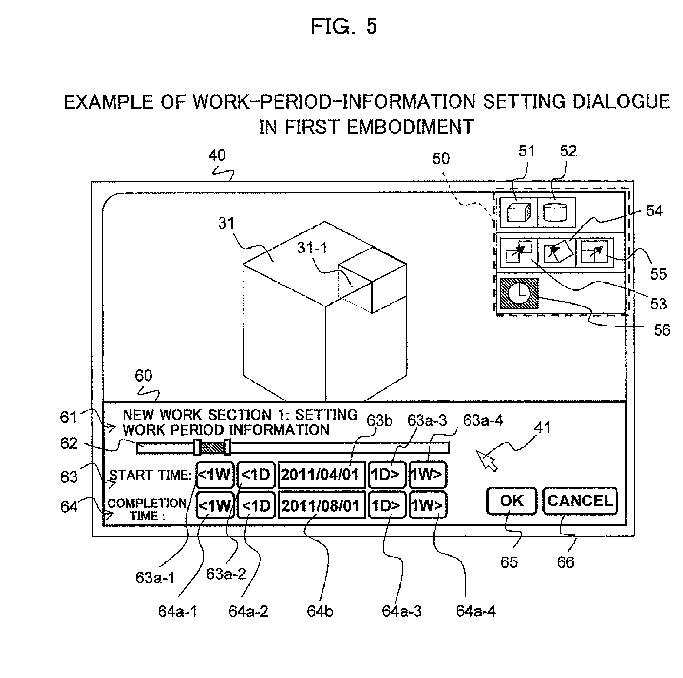

FIG. 5 is a diagram showing an example of a work-period-information setting dialogue in the first embodiment.
Similarly to the work section creation screen 40, shown in FIG. 4, the work section creation screen 40, shown in FIG. 5, includes at the right top the work section operation tool 50, displays at the central portion the shape of the building 31, which is the object of creating work sections, and further displays at the most anterior portion a work-period-information setting dialogue 60.

The work-period-information setting dialogue 60 includes a work-period-information setting object section 61, a work-period setting slider 62, a start-time display setting part 63, a completion-time display setting part 64, an OK button 65, and a cancel button 66.
The work-period-information setting object section 61 indicates the name of a work section to be an object of setting work period information. In FIG. 5, 'new work section 1' is displayed.

The work-period setting slider 62 is a slide bar for setting work period information. Right direction represents the direction where time proceeds, and the diagonal part indicates a work period. By dragging the rectangle on the left side of the diagonal part, a start time included in the work period information can be set. By dragging the rectangle on the right side of the diagonal part, a completion time included in the work period information can be set.

The start-time display setting part 63 is provided with a start time display box 63b for displaying a start time, and work period fine adjustment buttons 63a-1 to 63a-4 for fine adjustment of the start time.

The work period fine adjustment button 63a-1 adjusts the start time to one week ago. The work period fine adjustment button 63a-2 adjusts the start time to one day ago. The work period fine adjustment button 63a-3 adjusts the start time to one day after. The work period fine adjustment button 63a-4 adjusts the start time to one week after.

The completion-time display setting part 64 is provided with a completion time display box 64b for displaying a completion time and work period fine adjustment buttons 64a-1 to 64a-4 for fine adjustment of the completion time. The functions of the work period fine adjustment buttons 64a-1 to 64a-4 are similar to the functions of the work period fine adjustment buttons 63a-1 to 63a-4.
By clicking the OK button 65, a work period having been set is reflected. By clicking the cancel button 66, a work period having been set is cancelled.

The building process assignment unit 13 obtains a work section, which is an object of setting, via the input unit 11 and the work section creation screen 40, obtains the start times and the completion time of the work via the work-period-information setting dialogue 60, sets work period information including the combination of the start time and the completion time of the work as attributes of the work section being the object of setting, and holds the work period information in the building information holding unit 21.

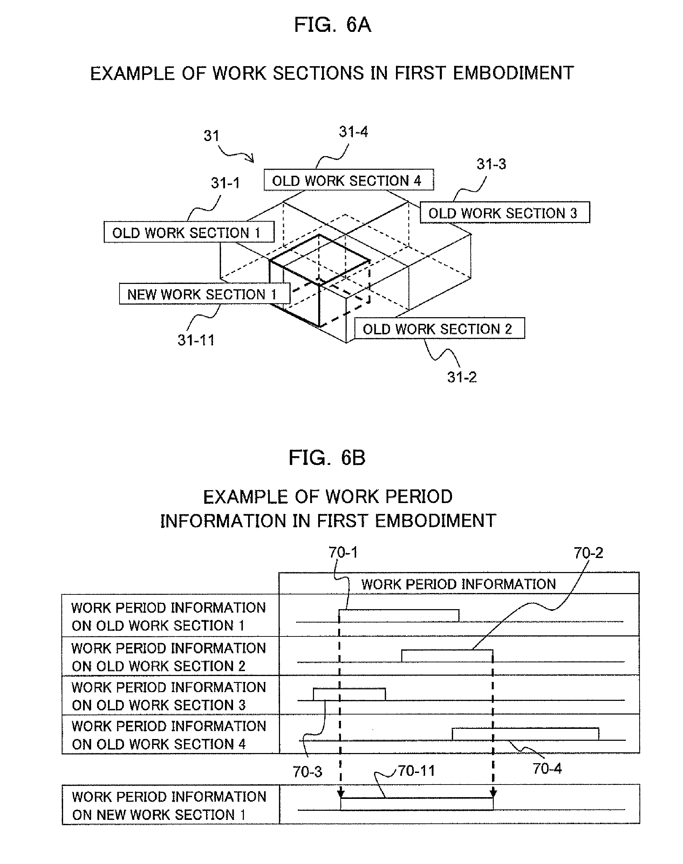

FIGS. 6A and 6B are diagrams showing an example of work sections and work period information in the first embodiment.
FIG. 6A shows a perspective view of an example of spatial disposition information on work sections in the first embodiment. A building 31, which is a rectangular parallelepiped, is divided in old work sections 1 (31-1) to 4 (31-4). A new work section 1 (31-11) is set such as to overlap with the old work section 1 (31-1) and the old work section 2 (31-2).

FIG. 6B shows an example of a Gantt chart showing work period information on the work sections in the first embodiment. In all the work period information, the right direction represents the direction where time proceeds.
In the old work section 1 (31-1), building work is carried out, according to work period information 70-1. Likewise in the below, building work is carried out in the old work section 2 (31-2), according to work period information 70-2. In the old work section 3 (31-3), building work is carried out, according to work period information 70-3. In the old work section 4 (31-4), building work is carried out, according to work period information 70-4.

In the new work section 1 (31-11), building work is carried out, according to work period information 70-11. The work period information 70-11 on the new work section 1 (31-11) is formed by the earliest start time and the latest completion time of the old work section 1 (31-1) and the old work section 2 (31-2), which overlap with the new work section 1 (31-11).

### Operation in First Embodiment

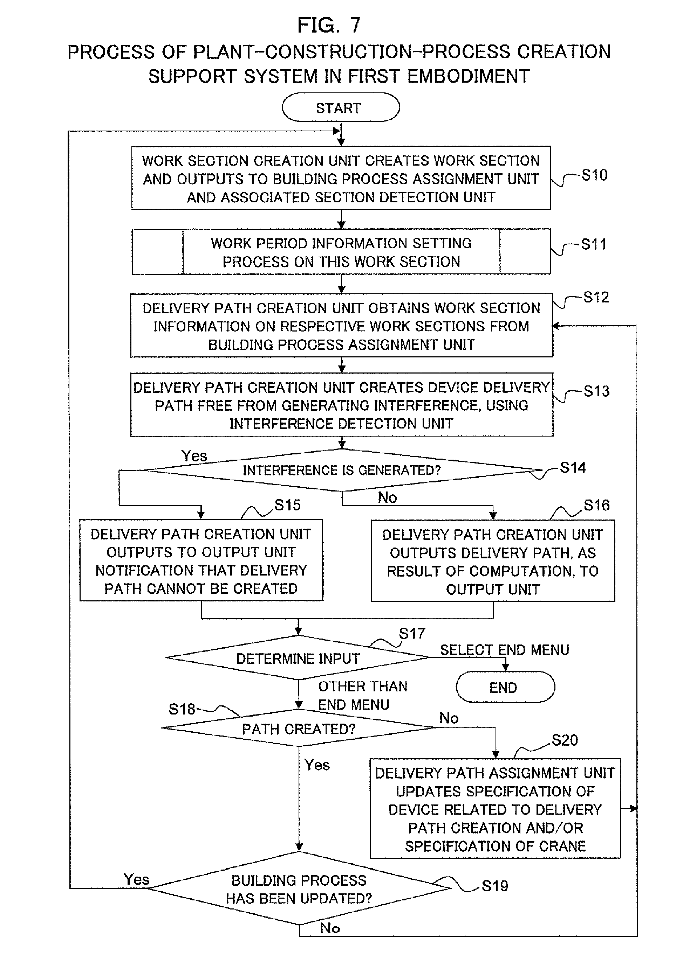

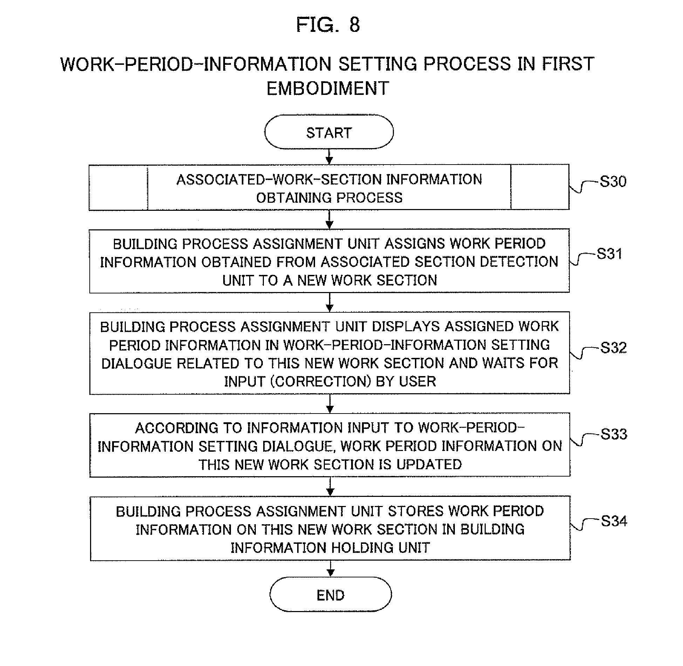

FIG. 7 is a flowchart showing the process of the plant-construction-process creation support system in the first embodiment.
When the process has started, in step S10, as shown in FIG. 6A, the work section creation unit 12 obtains input of a work section via the input unit 11, creates a work section, and outputs the work section to the building process assignment unit 13 and the associated section detection unit 17.
In Step S11, the process of setting work period information on this work section, which is shown in FIG. 8 described later, is performed. This process of setting work period information is represented by the Gantt chart as an example shown in FIG. 6B.
In step S12, the delivery path creation unit 14 obtains work section information on respective work sections from the building process assignment unit 13.
In step S13, the delivery path creation unit 14 performs computation in order to create a delivery path for the device such that the delivery path is free from generating interference, using the interference detection unit 18.

In step S14, the delivery path creation unit 14 determines whether or not interference is generated. If interference is generated, in other words, if a delivery path free from generating interference cannot be obtained for the device (Yes), the delivery path creation unit 14 performs the process in step S15. If interference is not generated (No), the process in step S16 is performed.
In step S15, the delivery path creation unit 14 outputs to the output unit 19 a notification that a delivery path cannot be created, and performs the process in step S17.
In step S16, the delivery path creation unit 14 outputs a delivery path, which is a result of computation, to the output unit 19, and performs the process in step S17.

In step S17, the input unit 11 determines whether or not a menu related to end of creating a work section (hereinafter, referred to as 'end menu') has been selected. If the end menu has been selected, then the process, shown in FIG. 7, is terminated. If the end menu has not been selected, then the process in step S18 is performed.
In step S18, the delivery path creation unit 14 determines whether or not a delivery path has been created. If a delivery path has been created (Yes), then the process in step S19 is performed. If a delivery path has not been created (No), the process in step S20 is performed.
In step 19, the delivery path creation unit 14 determines whether or not the whole building process has been updated. If the whole building process has been updated (Yes), the process returns to the step in step S10. If the whole building process has not been updated (No), the process returns to the step in step S12.
In step S20, the delivery path creation unit 14 updates the specification of the device related to creation of a delivery path and/or the specification of the crane, and the process returns to the process in step S12.

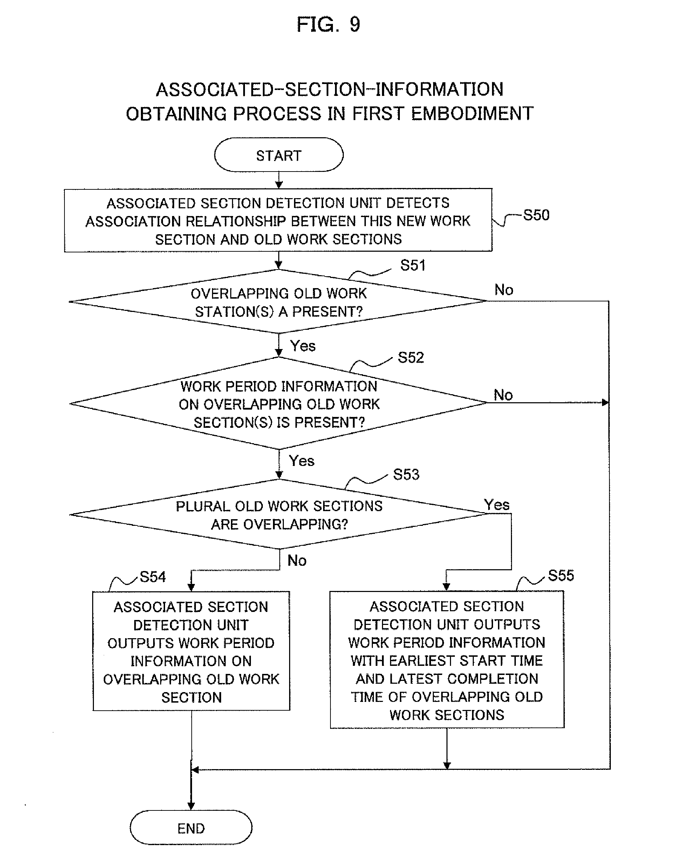

FIG. 8 is a flowchart showing the process of setting work period information in the first embodiment.
When the process has started, in step S30, the process of obtaining associated work section information, shown in FIG. 9 described later, is performed and work period information is output.
In step S31, the building process assignment unit 13 assigns the work period information obtained from the associated section detection unit 17 to the new work section.
In step S32, the building process assignment unit 13 displays the work-period-information setting dialogue 60 (refer to FIG. 5) related to the new work section and waits for an input by the user.
In step S33, according to information having been input to the work-period-information setting dialogue 60, the work period information on the new work section is updated.
In step S34, the building process assignment unit 13 stores the work period information on the new work section in the building information holding unit 21 and terminates the process in FIG. 8.

FIG. 9 is a flowchart showing the process of obtaining associated section information in the first embodiment.
When the process has started, in step S50, the associated section detection unit 17 detects the association relationship between the new work section and the old work sections (refer to FIG. 6A).
In step S51, the associated section detection unit 17 determines whether or not an old work section/sections overlapping with the new work section are present. If an old work section/sections overlapping with the new work section are present (Yes), then the process in step S52 is performed. If an old work section overlapping with the new work section is absent (No), then the process terminates the process in FIG. 9. In the case of the example shown in FIG. 6A, the process in step S51 branches to Yes.

In step S52, the associated section detection unit 17 determines whether or not work section information on the old work section/sections overlapping the new work section is present. If work section information on the old work section/sections overlapping the new work section is present (Yes), then the process in step S53 is performed. If work section information on the old work section/sections overlapping the new work section is absent, then the process in FIG. 9 is terminated. In the case of the example shown in FIG. 6A, the process in step S52 branches to Yes.

In step S53, the associated section detection unit 17 determines whether or not plural work sections are overlapping with the new work section. If plural old work sections are not overlapping with the new work section (No), the process in step S54 is performed. If plural old work sections are overlapping with the new work section (Yes), the process in step S55 is performed. In the case of the example shown in FIG. 6A, the process in step S53 branches to Yes.

In step S54, the associated section detection unit 17 outputs the work period information on the old work section. When the process in step S54 is completed, the process in FIG. 9 is terminated.

In step S55, the associated section detection unit 17 outputs work period information with the earliest start time and the latest completion time of the old work sections overlapping with the old work section (refer to FIG. 6B). When the process in step S55 is completed, the process in FIG. 9 is terminated.
In case of inputting a new work section at a place overlapping with an old work section/work sections that are present from before updating of the building process, when the building process has been updated, the building process assignment unit 13 calls the process of obtaining associated section information shown in FIG. 9, and thereby assigns work period information on the old work section/sections to work period information on the new work section.
In case that plural old work sections are overlapping with the new work section, when the building process has been updated, the building process assignment unit 13 assigns the earliest of the start times of the work period information on these plural old work sections to the start time of the work period information on the new work section, and assigns the latest of the completion times of the work period information on these plural work sections to the completion time of the work period information on the new work section.

### Advantages of the first embodiment

The above-described first embodiment has advantages as the following item (A).

(A) In case that work sections have been elaborated with progress of the plant construction plan, the associated section detection unit 17 is used so that a new work section takes over the work period information on an old work section/sections overlapping with the new work section. In such a manner, redoing of work for a plant construction plan is avoided, and dropping in the efficiency can be reduced.

### Second Embodiment

A plant-construction-process creation support system 10 in a second embodiment has a structure that is similar to that of the plant-construction-process creation support system 10, shown in FIG. 1, in the first embodiment.

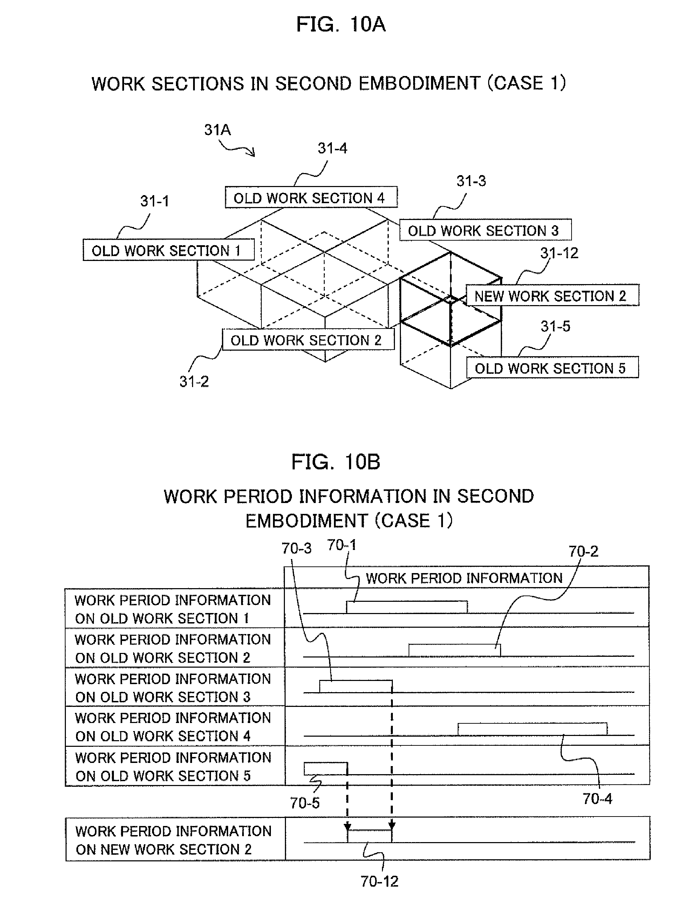

FIGS. 10A and 10B are diagrams showing work sections and work period information (Case 1) in a second embodiment. The same symbols are assigned to the elements same as those of the work sections and the work period information shown in FIGS. 6A and 6B.

FIG. 10A shows a perspective view of an example of spatial disposition information on work sections in the second embodiment (Case 1). In addition to the old sections 1 (31-1) to 4 (31-4) shown in FIG. 6A, a building 31A further includes an old work section 5 (31-5) and a new work section 2 (31-12).
The new work section 2 (31-12) is set on the upper surface of the old work section 5 (31-5), such as to be horizontally next to the old work section 3 (31-3).

FIG. 10B shows an example of a Gantt chart showing work period information on the work sections (Case 1) in the second embodiment. In all the work period information, the right direction represents the direction where time proceeds.
In addition to the work period information 70-1 to 70-4 in the first embodiment shown in FIG. 6B, FIG. 10B further shows work period information 70-5 on the old work section 5 (31-5) and work period information 70-12 on the new work section 2 (31-12).

The start time in the work period information 70-12 on the new work section 2 (31-12) is set to be later than the completion time in the work period information 70-5 on the old work section 5 (31-5), and to be later than the stat time of the old work section 3 (31-3). That is, in the example shown in FIG. 10B, the start time in the work period information 70-12 is set to be later than the completion time in the work period information 70-5. The completion time in the work period information 70-12 on the new work section 2 (31-12) is set to be the completion time of the old work section 3 (31-3).
In this situation, a building process is planned such that the old work section 5 (31-5) on the lower side is scheduled to be built before the new work section 2 (31-12) on the upper side is built, with consistency of the building process. Further, the new work section 2 (31-12) is affected by the work period of the horizontally next old work section 3 (31-3). Accordingly, the new work section 2 (31-12) takes over the work period information on the old work section 3 (31-3).

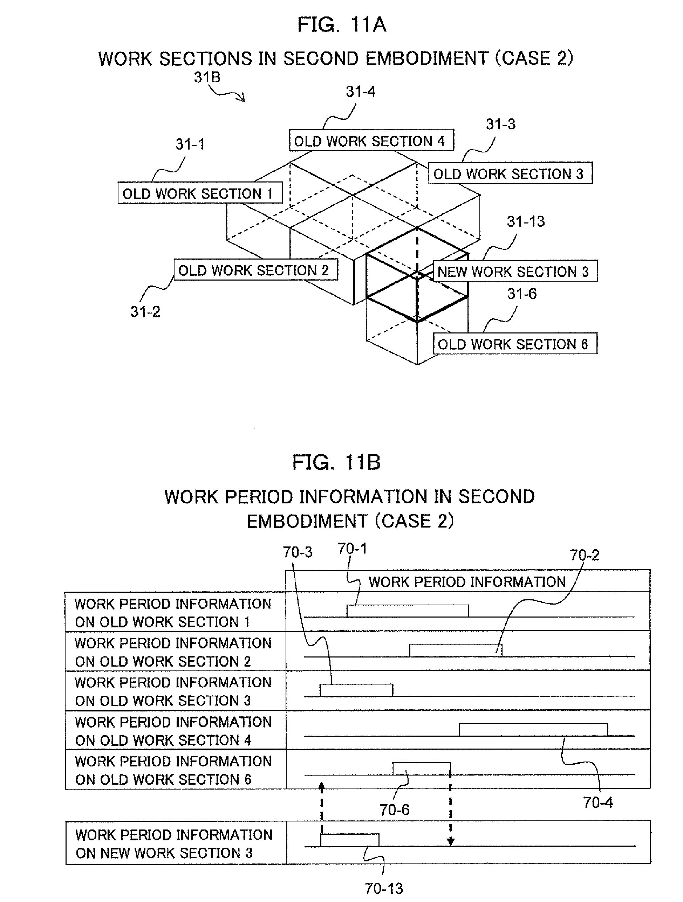

FIGS. 11A and 11B are diagrams showing work sections and work period information (Case 2) in the second embodiment. The same symbols are assigned to the elements same as those of the work sections and the work period information shown in FIGS. 6A and 6B.

FIG. 11A shows a perspective view of an example of spatial disposition information on work sections in the second embodiment (case 2). In addition to the old sections 1 (31-1) to 4 (31-4) shown in FIG. 6A, a building 31B further includes an old work section 6 (31-6) and a new work section 3 (31-13).
The new work section 3 (31-13) is set on the upper surface of the old work section 6 (31-6), such as to be horizontally next to the old work section 2 (31-2).

FIG. 11B shows an example of a Gantt chart showing work period information on the work sections (Case 2) in the second embodiment. In all the work period information, the right direction represents the direction where time proceeds.
In addition to the work period information 70-1 to 70-4 in the first embodiment shown in FIG. 6B, FIG. 11B further shows work period information 70-6 on the work section 6 (31-6) and work period information 70-13 on the new work section 3 (31-13).
The start time in the work period information 70-13 on the new work section 3 (31-13) is set to be earlier than the completion time of the old work section 6 (31-6). In this situation, a building process is planned such that the old work section 6 (31-6) on the lower side is scheduled to be built after the new work section 3 (31-13) on the upper side is built, and contradiction is caused in the building process.
Further, the work period information 70-2 on the horizontally next old work section 2 (31-2) is not taken over by the work period information 70-13 on the new work section 3 (31-13).

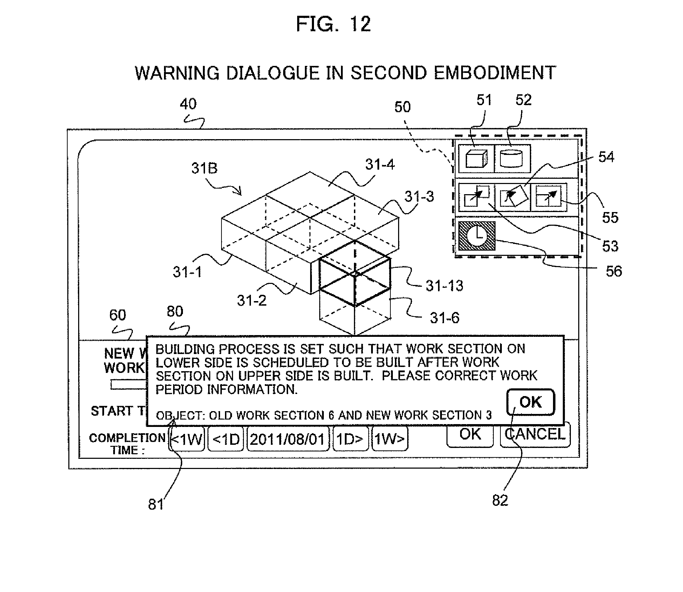

FIG. 12 is a diagram showing a warning dialogue in the second embodiment.
The work section creation screen 40 includes at the right top the work section operation tool 50, displays at the central portion the shape of the building 31B, which is the object of creating work sections, further displays at the anterior portion a work-period-information setting dialogue 60, and displays at the most anterior a warning dialogue 80. The warning dialogue 80 is a warning notifying the user of a state being out of work time range.

This warning dialogue 80 displays a message 'The building process is set such that the work section on the lower side is scheduled to be built after the work section on the upper side is built. Please correct the work period information'. At the lower portion of the warning dialogue 80, a message 'Object: old work section 6 and new work section 3' is displayed as a warning-object work section message 81, and an OK button 82 is displayed.

By this warning dialogue 80, the user can detect a case that contradiction is generated in the building process having the work period information on the work section on the upper side and the work period information on the work section on the lower side, and can make a correction to eliminate this contradiction.

### Operation in Second Embodiment

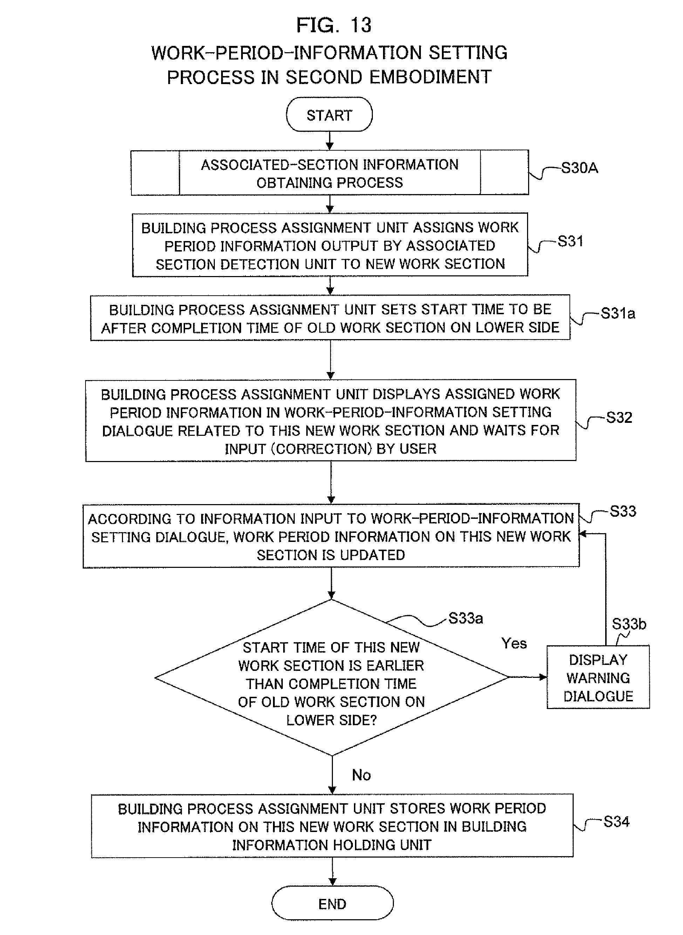

FIG. 13 is a flowchart showing the process of setting work period information in the second embodiment. The same symbols are assigned to the same elements as those in the flowchart in the first embodiment shown in FIG. 8.

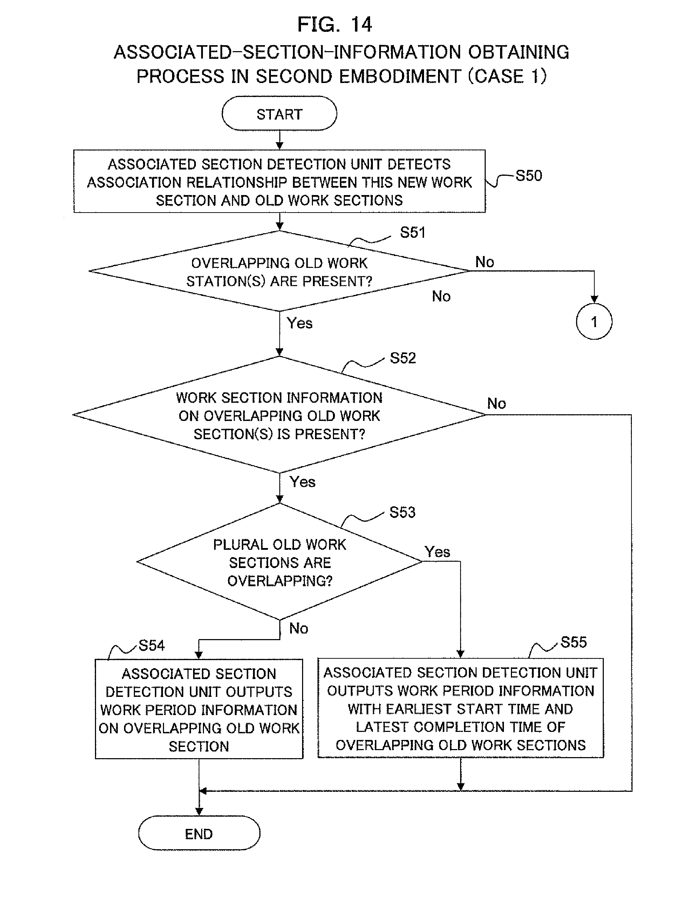

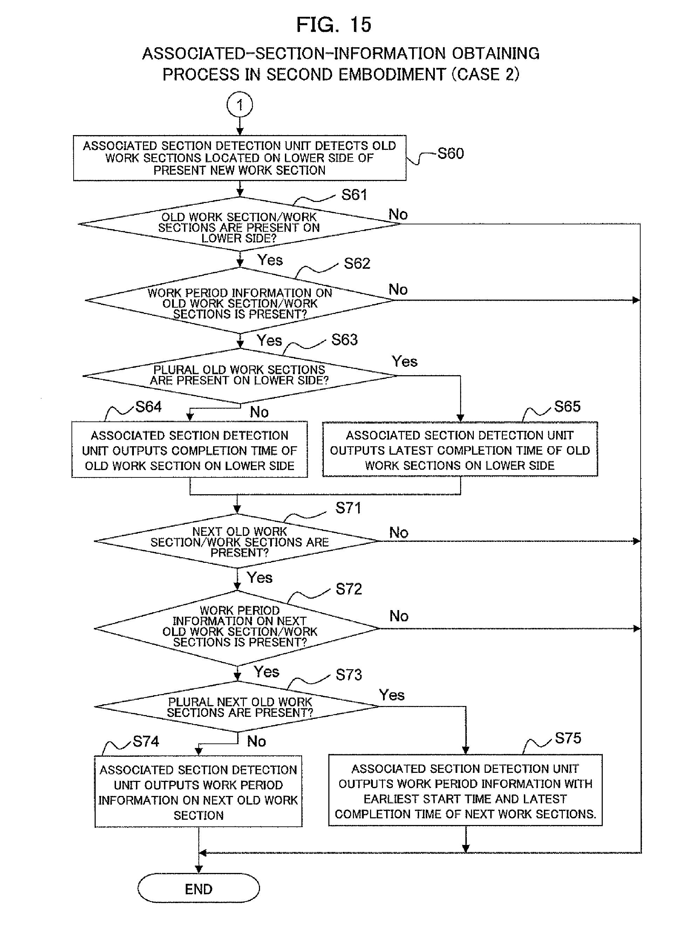

When the process has started, in step S30A, a process of obtaining associated segment information, which is different from the process of obtaining associated segment information in step S30 in the first embodiment, is performed. This process of obtaining associated segment information in the present embodiment is shown in FIGS. 14 and 15 described later.

In step S31, similarly to the process in step S31 in the first embodiment, work period information that is output by the associated section detection unit 17 is assigned to a new work section.
In step S31a, the building process assignment unit 13 sets a start time to be after the completion time of the old work section on the lower side.
The process in steps S32 to S33 is similar to that in steps S32 to S33 in the first embodiment.

In step S33a, the building process assignment unit 13 determines whether or not the start time of this new work section is earlier than the completion time of the old work section on the lower side (the lower side of the building). If the start time of the new work section is earlier than the completion time of the old work section on the lower side (Yes), as contradiction is generated in the process, the process in step S33b is performed. If the start time of the new work section is not earlier than the completion time of the old work section on the lower side (No), the process in step S34 is performed.
In step S33b, the building process assignment unit 13 displays the warning dialog 80, and if the OK button 82 is clicked, the process returns to the process in step S33.
The process in step S34 is similar to the process in step S34 in the first embodiment. When the process in step S34 has been completed, the process in FIG. 13 is terminated.

FIG. 14 is a flowchart showing the process of obtaining associated section information (Case 1) in the second embodiment. The same symbols are assigned to the same elements as those in the flowchart in the first embodiment shown in FIG. 9.
After the process starts, the process in step S50 is similar to the process in step S50 in the first embodiment.

In step S51, the associated section detection unit 17 determines whether or not an old work section/work sections that are overlapping with the new work section are present. If an old work section/work sections overlapping with the new work section are present (Yes), the process in step S52 is performed. If an old work section overlapping with the new work section is absent (No), the process of node 1 shown in FIG. 15 described later is performed.
In the description below, the process in steps S52 to S55 are similar to the process in steps S52 to S55 in the first embodiment.

FIG. 15 is a flowchart showing the process of obtaining associated section information (Case 2) in the second embodiment.
When the process moves to the node 1, in step S60, the associated section detection unit 17 detects the old work section located on the lower side (the lower side of the building) of the new work section.
In step S61, the associated section detection unit 17 determines whether or not an old work section/work sections are present located on the lower side of the new work section. If an old work section/work sections are present on the lower side of the new work section (Yes), the process in step S62 is performed. If an old work section is absent on the lower side of the new work section (No), the process in FIG. 15 is terminated.

In step S62, the associated section detection unit 17 determines whether or not work period information on the old work section/work sections, which are present on the lower side of the new work section, is present. If work period information on the old work section/work sections located on the lower side of the new work section is present (Yes), the process in step S63 is performed. If work period information on the old work section/work sections located on the lower side of the new work section is absent (No), the process in FIG. 15 is terminated.

In step S63, the associated section detection unit 17 determines whether or not plural old work sections are present on the lower side of the new work section. If plural work sections are not located on the lower side of the new work section (No), the process in step S64 is performed. If plural old work sections are located on the lower side of the new work section (Yes), the process in step S65 is performed.

In step S64, the associated section detection unit 17 outputs the completion time of the old work section on the lower side. When the process in step S64 has been completed, the process in step S71 is performed.

In step S65, the associated section detection unit 17 outputs the latest completion time of the old work sections on the lower side. When the process in step S65 has been completed, the process in step S71 is terminated.

In step S71, the associated section detection unit 17 determines whether or not an old work section/work sections, which are horizontally next to the new work section, are present. If an old work section/work sections, which are horizontally next to the new work section, are present (Yes), the process in step S72 is performed. If an old work section, which is horizontally next to the new work section, is absent (No), the process in FIG. 15 is terminated.

In step S72, the associated section detection unit 17 determines whether or not work period information on the old work section/work sections, which are horizontally next to the new work section, is present. If work period information on the old work section/work sections, which are horizontally next to the new work section, is present (Yes), the process in step S73 is performed. If work period information on the old work section/work sections, which are horizontally next to the new work section, is absent (No), the process in FIG. 15 is terminated.

In step S73, the associated section detection unit 17 determines whether or not plural old work sections, which are horizontally next to the new work section, are present (Yes). If plural old work sections, which are horizontally next to the new work section, are not present (No), the process in step S74 is performed. If plural old work sections, which are horizontally next to the new work section, are present (Yes), the process in step S75 is performed.

In step S74, the associated section detection unit 17 outputs the work period information on the next old work section. When the process in step S74 has been completed, the process in FIG. 15 is terminated.

In step S75, the associated section detection unit 17 outputs work period information with the earliest start time and the latest completion time of the next work sections. When the process in step S75 has been completed, the process in FIG. 15 is terminated.

### Advantages of the Second Embodiment

The above-described second embodiment has advantages as the following items (B) and (C).
(B) In case that work sections have been elaborated with the progress of the plant construction plan, the associated section detection unit 17 is used to detect a case that no old work section overlapping with a new work section is present and an old work section/work sections located on the lower side of this new work section are present, and sets the start time of this new work section to be later than the completion time of this old work section/work sections. It is thereby possible to prevent generation of redoing work on a plant construction plan, and reduce dropping in the efficiency.

(C) In case that work sections have been elaborated with the progress of the plant construction plan, the associated section detection unit 17 is used to detect a case that no old work section overlapping with a new work section is present and an old work section/work sections located on the lower side of this new work section are present, and sets the start time of this new work section to be later than the completion time of this old work section/work sections. Further, in case that an old work section/work sections, which are next to this new work section, are present, the work period information related to this/these old work section/work sections is taken over by the new work section. It is thereby possible to prevent generation of redoing work on a plant construction plan, and reduce dropping in the efficiency.

### Third Embodiment

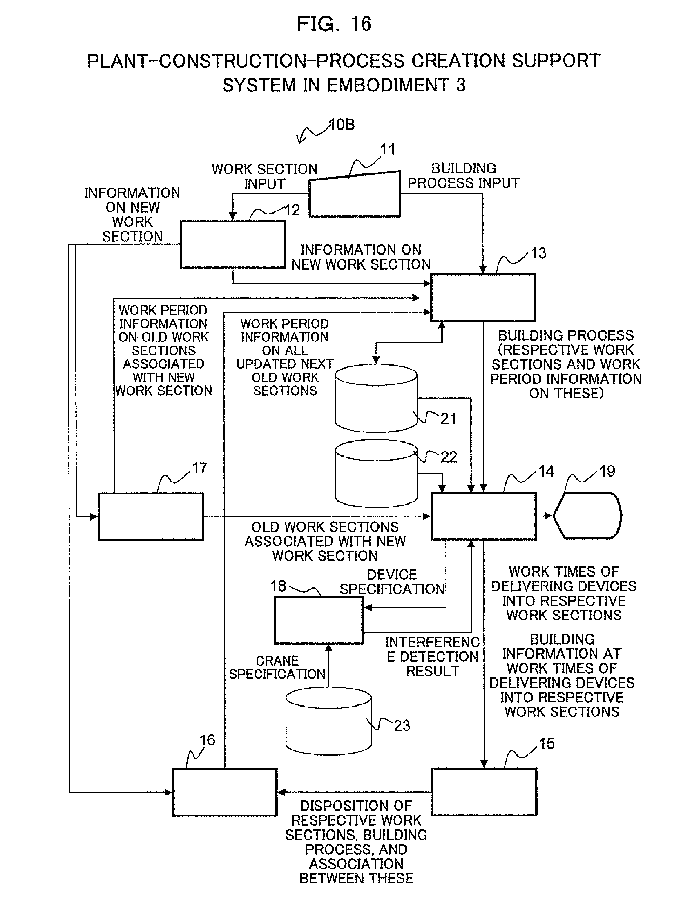

FIG. 16 is a diagram showing a plant-construction-process creation support system in a third embodiment. Common symbols are assigned to the elements common with those in FIG. 1 showing the first embodiment.

In addition to the plant-construction-process creation support system 10 shown in FIG. 1, a plant-construction-process creation support system 10B in the present embodiment further includes a disposition/process extraction unit 15 and a work period computation unit 16.

From information on a building having been input from the delivery path creation unit 14, the disposition/process extraction unit 15 extracts the dispositions of work sections, a building process, association between them, and transmits these to the work period computation unit 16.

From the work section creation unit 12, the work period computation unit 16 obtains a new work section after elaborating a building process, computes work period information to be assigned as the initial value of this new work section from the building process having been input from the disposition/process extraction unit 15, and outputs the new work section to which the work period information has been assigned.

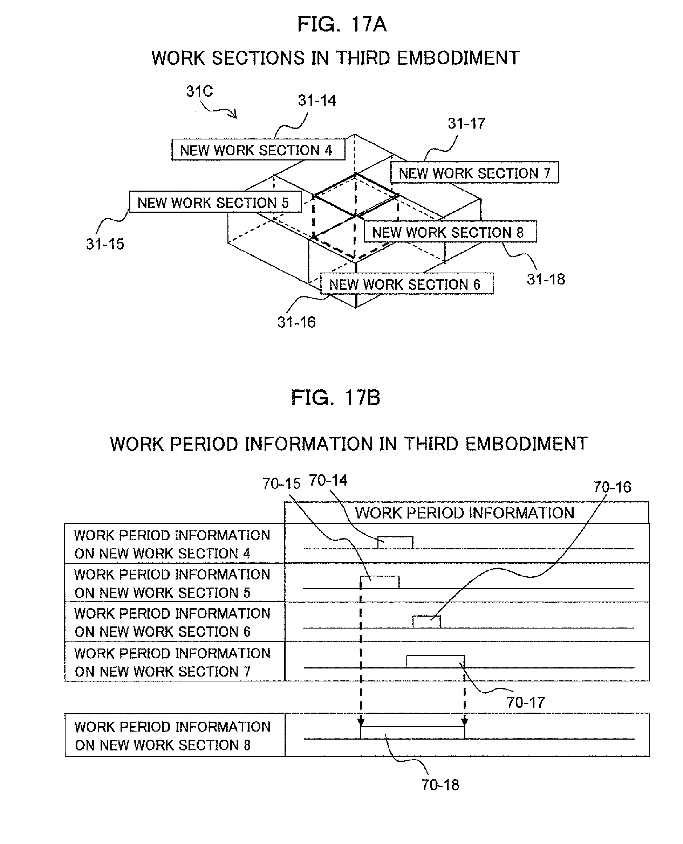

FIGS. 17A and 17B are diagrams showing work sections and work period information in the third embodiment.
FIG. 17A shows a perspective view of an example of spatial disposition information on work sections in the third embodiment. A building 31C, which is a rectangular parallelepiped, is divided in new work sections 4 (31-14) to 8 (31-18). The new work sections 4 (31-14) to 7 (31-17) are set to be next, in all horizontal directions, to the new work section 8 (31-18).

FIG. 17B shows an example of a Gantt chart showing work period information on the work sections in the third embodiment. In all the work period information, the right direction represents the direction where time proceeds.
Building work is carried out in the new work section 4 (31-14), according to work period information 70-14. Likewise, in the below, building work is carried out in the new work section 5 (31-15), according to work period information 70-15. Building work is carried out in the new work section 6 (31-16), according to work period information 70-16. Building work is carried out in the new work section 7 (31-17), according to work period information 70-17.

Herein, the work period information on the new work section 8 (31-18) having been newly set is set, referring to the work period information on the next new work sections 4 (31-14) to 7 (31-17) which are next, in all horizontal directions, to the new work section 8 (31-18). The start time of the work period information 70-15, which is the earliest of the start times of the new work sections 4 (31-14) to 7 (31-17), is set as the start time of the work period information 8 (31-18). The completion time of the work period information 70-17, which is the latest of the completion times of the new work sections 4 (31-14) to 7 (31-17), is set as the completion time of the work period information 8 (31-18).
This is because the work in the new work section 8 (31-18) is affected by the works in the new work sections 4 (31-14) to 7 (31-17), which are next, in all horizontal directions, to the new work section 8 (31-18).

### Operation in Third Embodiment

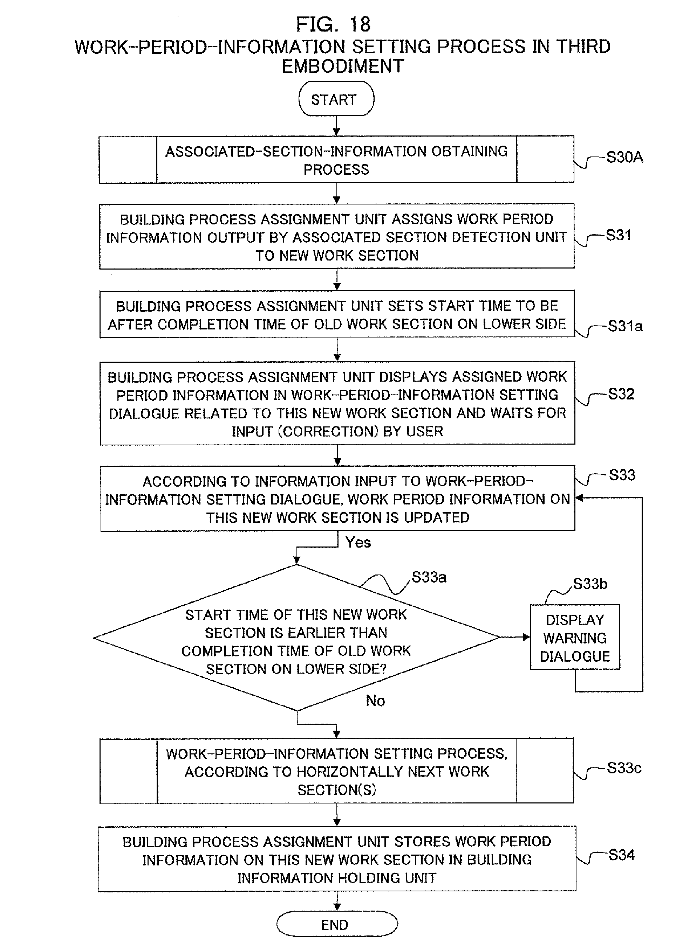

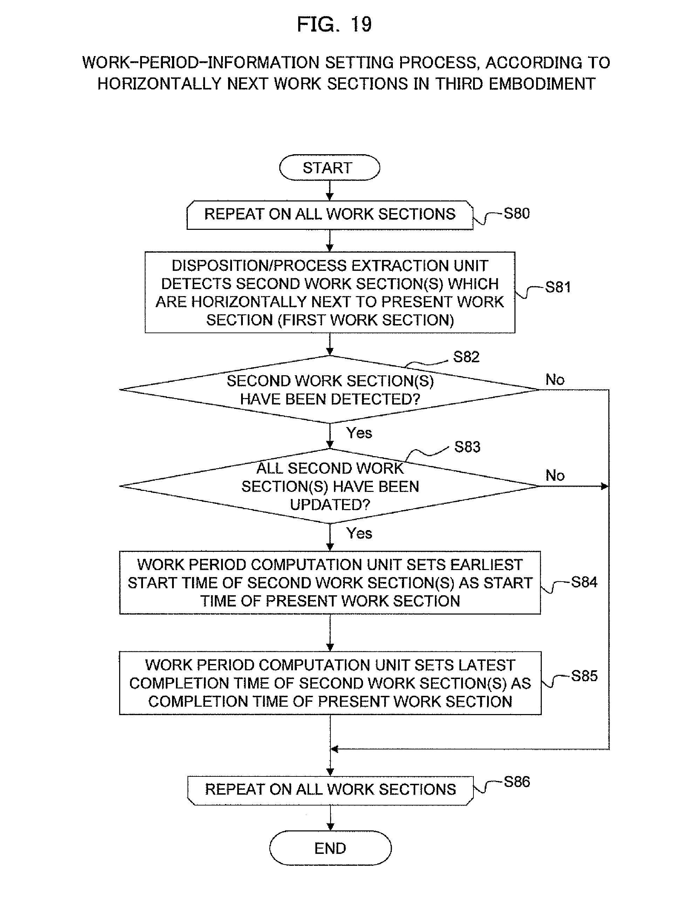

FIG. 18 is a flowchart showing the process of setting work period information in the third embodiment. The same symbols are assigned to the same elements as those in the flowchart in the second embodiment shown in FIG. 13.
After the process has started, the process in steps S30A to S33a are similar to these in steps S30A to S33a in the second embodiment.
In step S33c, a process of setting work period information is performed, according to horizontally next work sections. This process of setting work period information is shown in details in FIG. 19 described later.
The process in step S34 is similar to the process in step S34 in the second embodiment. When the process in step S34 has been completed, the process in FIG. 18 is terminated.

FIG. 19 is a flowchart showing the process of setting work period information, according to horizontally next work sections in the third embodiment.
When the process in FIG. 19 has started, the process in steps S80 to S86 is repeated on all the work sections.
In step S81, the disposition/process extraction unit 15 detects all second work sections which are next, in all horizontal directions, to the present work section (the first work section).

In step S82, the disposition/process extraction unit 15 determines whether or not a second work section/work sections have been detected. If second work sections have been detected (Yes), the process in step S83 is performed. If a second work section has not been detected (No), the process in step S86 is performed.

In step S83, the disposition/process extraction unit 15 determines whether or not all the second work sections have been updated. If all the second work sections have been updated (Yes), the process in step S84 is performed. If not all the second work sections have been updated (No), the process in step S86 is performed.
In step S84, the work period computation unit 16 sets the earliest start time of the second work sections as the start time of the present work section.
In step S85, the work period computation unit 16 sets the latest completion time of the second work sections as the completion time of the present work section.

In step S86, if the process has not been repeated on all the work sections, the process returns to the process in step S80. If the process has been repeated on all the work sections, the process in FIG. 19 is terminated.
When the user has updated the work period information on all the second work sections which are horizontally next to the first work section, the building process assignment unit 13 obtains, by the work period computation unit 16, the earliest of the start times of the work period information on these second work sections and assigns it to the start time of the work period information on the first work section, and obtains the latest of the completion times of the work period information on these second work sections and assigns it to the completion time of the work period information on the first work section.

### Advantages of Third Embodiment

The above-described third embodiment has an advantage as the following item (D).
(D) In case that work sections have been elaborated with the progress of the plant construction plan, the associated section detection unit 17 is used so that the first work section takes over the work period information related to all the second work sections that are all next, in horizontal direction, to the first work section. It is thereby possible to prevent generation of redoing work on a plant construction plan, and reduce dropping in the efficiency.

### Modified Example

The invention is not limited to the foregoing embodiments and can be modified and changed without departing from the spirit of the invention. Modified examples of embodiment of the invention include the following item (a), for example.

(a) In the first to third embodiments, the plant-construction-process creation support system 10 or 10B is used for processing. However, the invention is not limited thereto, and a plant-construction-process creation support program for performing a method of supporting creation of a plant construction process, as described above, by a computer provided with an input unit 11, such as a mouse or keyboard, and an output unit 19, such as a display, may be implemented.

## Claims

1. A plant-construction-process creation support system that supports creation of a construction process for a plant and a building process for a building of the plant, comprising:
a device specification holding unit that holds specifications of devices;
a building information holding unit that holds information on the building and respective work sections elaborated from the building; and
a building process assignment unit that, when a building process for an outline building has been obtained, assigns tentative work period information to the respective work sections, and when the building process for the building has been updated, assigns detailed work period information to the respective work sections,
wherein, in case of inputting a new work section at a place overlapping with an old work section/sections that are present from before updating the building process, when the building process has been updated, the building process assignment unit assigns work period information on the old work section/sections to work period information on the new work section.

2. The plant-construction-process creation support system according to claim 1, further comprising:
a crane specification holding unit that holds specification of a crane for delivering the devices into the building; and
a delivery path creation unit that computes paths for delivering the respective devices each of which is to be delivered into one of the work sections, avoiding interference on the paths, based on the specifications of the respective devices, information on the building, information on the respective work sections, and the specification of the crane.

3. The plant-construction-process creation support system according to claim 1 or 2,
wherein in case that plural old work sections are present as the old work sections, when the building process has been updated, the building process assignment unit assigns the earliest of start times of the work period information on the plural old work sections to a start time of the work period information on the new work section, and assigns the latest of completion times of the work period information on the plural old work sections to a completion time of the work period information on the new work section.

4. The plant-construction-process creation support system according to claim 1 or 2,
wherein in case of setting a new work section at a place that does not overlap with any old work section that is present from before updating the building process, if an old work section/sections are present on a lower side of the new work section, the building process assignment unit sets a start time of the new work section to be later than a completion time/times of the old work section/sections on the lower side.

5. The plant-construction-process creation support system according to claim 4,
wherein if an old work section/sections are present horizontally next to the new work section, the building process assignment unit assigns work period information on the next work section/work sections to the work period information on the new work section.

6. The plant-construction-process creation support system according to claim 5,
wherein, when the work period information on the new work section has been updated, if a start time of the work period information on the new work section after the update is earlier than the completion time of the old work section on the lower side, the building process assignment unit displays a warning that notifies a state of being out of a work time range.

7. The plant-construction-process creation support system according to any one of claims 1 to 6,
wherein, in case that a user has updated work period information on all of a second work section/sections that are horizontally next to a first work section, the building process assignment unit assigns the earliest of start times of work period information on the second work section/sections to a start time of work period information on the first work section, and assigns the latest of completion times of the work period information on the second work section/sections to a completion time of the work period information on the first work section.

8. A plant-construction-process creation support method executed by a plant-construction-process creation support system that supports creation of a construction process for a plant and a building process for a building of the plant, the method comprising:
a step of building process assigning that, when a building process of an outline building has been obtained, assigns tentative work period information to respective work sections elaborated from the building, and when the building process has been updated, assigns detailed work period information to the respective work sections,
wherein, in case of inputting a new work section at a place overlapping with an old work section/sections that are present from before updating the building process, when the building process has been updated, the step of building process assigning assigns work period information on the old work section/sections to work period information on the new work section.

9. The plant-construction-process creation support method according to claim 8, further comprising:
a step of creating delivery paths, wherein the step computes paths for delivering devices each of which is to be delivered into one of the work sections, avoiding interference on the paths, based on specifications of the respective devices, information on the building, information on the respective work sections elaborated from the building, and specification of a crane,
wherein, when the building process for the outline building has been obtained, the step of building process assigning assigns tentative work period information to the respective work sections that are objects of avoiding interference with the crane and the devices during delivery of the devices by the crane, and when the building process has been updated, the step of building process assigning assigns detailed work period information to the respective work sections.

10. The plant-construction-process creation support method according to claim 8 or 9,
wherein, in case that plural old work sections are present as the old work sections, when the building process has been updated, the step of building process assigning assigns the earliest of start times of the work period information on the plural old work sections to a start time of the work period information on the new work section, and assigns the latest of completion times of the work period information on the plural old work sections to a completion time of the work period information on the new work section.

11. The plant-construction-process creation support method according to claim 8 or 9,
wherein, in case setting a new work section at a place that does not overlap with any old work section that is present from before updating the building process, if an old work section is present on a lower side of the new work section, the step of building process assigning sets a start time of the new work section to be later than a completion time of the old work section on the lower side.

12. The plant-construction-process creation support method according to claim 11,
wherein, if an old work section/sections are present horizontally next to the new work section, the step of building process assigning assigns work period information on the next work section/work sections to the work period information on the new work section.

13. The plant-construction-process creation support method according to claim 12,
wherein, when the step of building process assigning has updated the work period information on the new work section, if a start time of the work period information on the new work section after the update is earlier than the completion time of the old work section on the lower side, the step of building process assigning displays a warning that notifies a state of being out of a work time range.

14. The plant-construction-process creation support method according to any one of claims 8 to 13,
wherein, in case that a user has updated work period information on all of a second work section/sections that are horizontally next to a first work section, the step of building process assigning assigns the earliest of start times of work period information on the second work section/sections to a start time of work period information on the first work section, and assigns the latest of completion times of the work period information on the second work section/sections to a completion time of the work period information on the first work section.

15. A plant-construction-process creation support program for executing the plant-construction-process creation support method according to any one of claims 8 to 14, by a computer that is the plant-construction-process creation support system.
